# EUROPÄISCHE PATENTSCHRIFT

(11) **EP 2 536 876 B1**
(45) Veröffentlichungstag und Bekanntmachung des Hinweises auf die Patenterteilung: **04.11.2015**
(21) Anmeldenummer: 11702969.4
(22) Anmeldetag: 01.02.2011
(51) Int. Cl.: D06F 37/20, D06F 37/30, G01H 1/00

(54) **VERFAHREN ZUR EINSTELLUNG EINER SCHLEUDERDREHZAHL EINER TROMMEL EINES HAUSGERÄTS ZUR PFLEGE VON WÄSCHESTÜCKEN**
METHOD FOR ADJUSTING A SPINNING SPEED OF A DRUM OF A HOUSEHOLD APPLIANCE FOR CARING FOR LAUNDRY ITEMS
PROCÉDÉ D'AJUSTEMENT D'UNE VITESSE D'ESSORAGE D'UN TAMBOUR D'UN APPAREIL MÉNAGER POUR L'ENTRETIEN D'ARTICLES LAVÉS

(30) Priorität: 17.02.2010 DE 102010002048
(43) Veröffentlichungstag der Anmeldung: 26.12.2012
(73) Patentinhaber: BSH Hausgeräte GmbH, 81739 München (DE)
(72) Erfinder: COMPAINS PASCUALENA, Eduardo, E-50012 Zaragoza (ES); JURMANN, Rainer, 14612 Falkensee (DE)
(86) Internationale Anmeldenummer: PCT/EP2011/051386
(87) Internationale Veröffentlichungsnummer: WO 2011/101237

(56) Entgegenhaltungen:
- EP-A1- 1 882 769
- EP-A1- 1 887 124
- WO-A1-2004/111324
- DE-A1-102007 028 256
- US-A- 5 930 855

## Beschreibung

Die Erfindung betrifft ein Verfahren zur Einstellung einer Schleuderdrehzahl einer Trommel eines Hausgeräts zur Pflege von Wäschestücken, beispielsweise einer Waschmaschine, eines Wäschetrockners oder eines Waschtrockners.

Bei derartigen Hausgeräten wird bei einem Pflegeprozess die Trommel in Rotation versetzt und somit ein Schleudervorgang durchgeführt. Dieses Schleudern erfolgt üblicherweise mit sich ändernder Drehzahl. Üblicherweise sind derartige Hausgeräte auf einem Untergrund aufgestellt, wobei abhängig von diesem Untergrund unterschiedliche Bedingungen im Hinblick auf Schwingungsübertragungen oder Schwingungsdämpfung auftreten. Gerade dann, wenn bei einem derartigen Schleudervorgang die Drehzahl variiert wird und über ein relativ großes Spektrum verändert wird, können somit Zustände auftreten, bei denen das Hausgerät relativ starken Vibrationen ausgesetzt ist. Dadurch können Funktionsbeeinträchtigungen auftreten, so dass der Pflegeprozess nachteilig beeinflusst wird. Darüber hinaus ist durch diese Vibrationen der Verschleiß von Komponenten des Hausgeräts erhöht.

Es ist aus DE 10 2007 028 256 A1 ein Verfahren zur Einstellung einer Schleuderdrehzahl einer Trommel einer auf einem Untergrund aufgestellten Waschmaschine bekannt, wobei aus einer Mehrzahl von Schleuderabläufen ein an den Untergrund angepasster Schleuderablauf ausgewählt wird. Diese Auswahl kann durch eine entsprechende Benutzereingabe oder in Abhängigkeit von einer erfassten untergrundabhängigen Vibration automatisch ausgewählt werden.

Aus US 5,930,855 A ist ein weiteres Verfahren zur Einstellung einer Trommelschleuderdrehzahl einer Waschmaschine bekannt. Bei diesem Verfahren werden in einem Schritt mittels eines Beschleunigungssensors Maschinenvibrationen erfasst, welche vom Untergrund des Aufstellungsorts der abhängig sind, und abhängig von den erfassten Maschinenvibrationen eine Schleuderdrehzahl verändert.

Weitere Verfahren zur Einstellung einer Trommelschleuderdrehzahl 1 einer Waschmaschine sind auch aus EP 1 887 124 A1 oder aus EP 1 882 769 A1 bekannt. Auch bei diesen Verfahren wird die Drehzahl abhängig von einer mit einem Beschleunigungssensor erfassten Maschinenvibration, die vom Untergrund des Aufstellorts abhängig ist, eingestellt.

Es ist Aufgabe der vorliegenden Erfindung, ein Verfahren zu schaffen, bei dem die Einstellung der Schleuderdrehzahl einer Trommel eines Hausgeräts verbessert wird, indem derartige Vibrationen zumindest deutlich reduziert werden können.

Diese Aufgabe wird durch ein Verfahren, welches die Merkmale nach Anspruch 1 aufweist, gelöst.

Bei einem erfindungsgemäßen Verfahren zur Einstellung einer Schleuderdrehzahl einer Trommel eines Hausgeräts zur Pflege von Wäschestücken wird dieses Hausgerät auf einem Untergrund aufgestellt. Bei einem Schleudervorgang des Hausgeräts wird ein Gradient der momentanen Drehzahl (Istdrehzahl) der Trommel erfasst und ermittelt, ob der Drehzahlgradient aufläuft oder abläuft. Dies bedeutet, ob der Drehzahlgradient größer oder gleich Null (Auflaufen) oder bei einem kleiner Null (Ablaufen) ist. Bei einem Auftreten von einer in der Frequenz und/oder der Amplitude untergrundabhängigen Vibration des Hausgeräts wird bei dem Schleudervorgang ferner diese Vibration detektiert und mit Referenz-Werten verglichen. Abhängig von dem ermittelten Drehzahlgradienten, dem Vergleich der Vibration mit Referenz-Werten und bei einem Abweichen der die Vibrationen charakterisierenden Parameterwerte von den Referenz-Werten wird die Schleuderdrehzahl vibrationsmindernd verändert. Solche Parameterwerte sind beispielsweise eine Frequenz und/oder eine Amplitude einer an einen Bauteil des Hausgeräts erfassten Beschleunigung, Schwinggeschwindigkeit oder Schwingweg sein. Durch das erfindungsgemäße Verfahren kann somit unabhängig davon, auf welchem Untergrund das Hausgerät aufgestellt wird, situationsspezifisch auf unerwünschte auftretende Vibrationen reagiert werden und individuell die Schleuderdrehzahl beim momentanen Schleudervorgang verändert werden. Es wird somit nicht mehr ein pauschal vorgegebenes Programm durchlaufen, welches dann unangepasst an die Aufstellbedingungen des Hausgeräts zu gegebenenfalls starken Vibrationen führt, sondern es wird praktisch intelligent darauf reagiert, wie sich die momentanen Situationen bei einem Schleudervorgang ergeben. Es kann somit bei jedem Aufstellungsort, welcher materiell und im Hinblick auf seine Schwingungseigenschaften Individualität aufweist, situationsspezifisch auf derartig dann auch situationsspezifisch und individuell auftretende Vibrationen reagiert werden und diese durch eine intelligente Veränderung der Schleuderdrehzahl unterbunden werden.

Gerade dann, wenn derartige Hausgeräte zur Pflege von Wäschestücken, wie beispielsweise Waschmaschinen mit frontseitiger Beschickungsöffnung, auf Holzfußböden aufgestellt werden, ergeben sich bei herkömmlichen Vorgehensweisen erhebliche Vibrationen, da derartige Holzfußböden relativ weich sind. Vibrationen in der Resonanzfrequenz des Fußbodens führen zu derart starken Vibrationen, dass ein hoher Verschleiß des Hausgeräts resultiert. Durch das erfindungsgemäße Verfahren kann gerade bei derartig spezifischen Untergrundbeschaffenheiten, wie relativ weichen Holzböden, das Auftreten solcher Vibrationen zumindest stark reduziert werden. Es kann somit auch erreicht werden, dass das Hausgerät bei einem Aufstellen auf derart spezifischen Untergrundbeschaffenheiten im Schleudervorgang auch dann vibrationsarm weiterbetrieben werden kann, wenn der Schleudervorgang und somit die Schleuderdrehzahl einen kritischen Drehzahlbereich erreicht hat.

Vorzugsweise wird die Schleuderdrehzahl abhängig von den die spezifische Vibration charakterisierenden Parameterwerten zur Reduzierung der Vibration verändert. Ganz situationsangepasst erfolgt somit die Änderung der Schleuderdrehzahl abhängig davon, bei welchen Drehzahlverhältnissen die Vibration auftritt und insbesondere auch davon, wie stark diese Vibration auftritt.

Vorzugsweise werden die Vibrationen durch einen Beschleunigungssensor erfasst. Dies ist eine relativ einfache und aufwandsarme Ausgestaltung, welche darüber hinaus auch kostengünstig und dennoch hoch zuverlässig ausgebildet ist. Bevorzugt werden die charakterisierenden Parameterwerte der Vibration an dem Gehäuse des Hausgeräts oder an einem mit dem Gehäuse des Hausgeräts starr verbundenen Bauteil, beispielsweise ein Aufstellfuß des Hausgeräts, erfasst.

Vorzugsweise erfolgt das Ermitteln, ob der Drehzahlgradient beim Schleudern momentan auflaufend oder ablaufend ist, bei einem Überschreiten einer Referenz-Amplitude durch eine erfasste spezifische Amplitude einer detektierten Vibration bei einem Schleudervorgang..

Vorzugsweise wird bei einem Auflaufen des Drehzahlgradienten eine Wartedrehzahl bestimmt und für eine vorgebbare Zeitdauer eingestellt bzw. gehalten, wobei sich die Wartedrehzahl aus der Istdrezahl abzüglich einer vordefinierten Delta-Drehzahl bestimmt. Vorzugsweise wird nach Ablauf dieser vorgebbaren Zeitdauer bestimmt, ob eine Solldrehzahl größer der Wartedrehzahl zuzüglich einer vordefinierten Resonanzbereichs-Drehzahl ist. Insbesondere wird der Schleudervorgang zumindest zeitweise mit dieser Solldrehzahl fortgesetzt, bis der Schleudervorgang ohne weitere unerwünscht hohe Vibration zu Ende führbar ist oder bis eine weitere unerwünscht hohe Vibration vor dem Ende des Schleudervorgangs detektiert wird, falls die Solldrehzahl größer ist als die Wartedrehzahl zuzüglich der vordefinierten Resonanzbereichs-Drehzahl. Vorzugsweise wird die Wartedrehzahl für eine weitere vorgebbare Zeitdauer gehalten, falls die Solldrehzahl kleiner ist, als die Wartedrehzahl plus bzw. zuzüglich der Resonanzbereichs-Drehzahl, wobei nach dieser weiteren Zeitdauer nochmals überprüft wird, ob die Solldrehzahl dann größer ist als die Wartedrehzahl plus der Resonanzbereichs-Drehzahl. Wird andererseits ein Ablaufen des Drehzahlgradienten erfasst, so wird bei einem derartigen Ablauf des Drehzahlgradienten eine zweite Wartedrehzahl bestimmt und für eine vorgebbare Zeitdauer wird diese Wartedrehzahl dann eingestellt bzw. gehalten, wobei sich diese zweite Wartedrehzahl aus der Istdrehzahl zuzüglich einer vordefinierten Delta-Drehzahl bestimmt.

Vorzugsweise wird nach Ablauf der Zeitdauer bestimmt, ob eine Solldrehzahl kleiner der zweiten Wartedrehzahl zuzüglich einer vordefinierten Resonanzbereichs-Drehzahl ist. Insbesondere wird der Schleudervorgang zeitweise mit dieser Solldrehzahl fortgesetzt, bis der Schleudervorgang ohne weitere unerwünscht hohe Vibration zu Ende führbar ist oder bis eine weitere unerwünscht hohe Vibration vor dem Ende des Schleudervorgangs detektiert wird, falls die Solldrehzahl kleiner als die zweite Wartedrehzahl abzüglich der Resonanzbereichs-Drehzahl ist. Vorzugsweise wird die zweite Wartedrehzahl für eine weitere vorgebbare Zeitdauer gehalten, falls die Solldrehzahl größer ist als die zweite Wartedrehzahl abzüglich der Resonanzbereichs-Drehzahl, wobei nach dieser weiteren Zeitdauer nochmals überprüft wird, ob die Solldrehzahl dann kleiner ist als die zweite Wartedrehzahl abzüglich der Resonanzbereichs-Drehzahl.

Vorzugsweise wird die Schleuderdrehzahl mit einem derartigen Gradienten bei detektierten unerwünscht hohen Vibrationen so verändert, dass ein Drehzahlband eines Resonanzbereichs der Vibrationen in sehr kurzer Zeit durchfahren wird. Insbesondere kann vorgesehen sein, dass ein Drehzahlband, welches ein Intervall von kleiner gleich 300 Umdrehungen zwischen einem oberen und einem unteren Grenzwert abdeckt, innerhalb einer Zeitdauer kleiner 5 Sekunden, insbesondere kleiner 3 Sekunden durchlaufen wird.

Untergrundspezifisch und somit material- und beschaffenheitsabhängig und somit abhängig vom Aufbau des Untergrunds können somit auf spezifisch davon abhängige Vibrationen des Hausgeräts bei einem Schleudergang Maßnahmen ergriffen werden, um die Schleuderdrehzahl so anzupassen, dass die Vibrationen möglichst schnell wieder abklingen und insbesondere komplett verschwinden.

Vorzugsweise wird die Delta-Drehzahl und die Resonanzbereichs-Drehzahl vorab in experimentellen Bestimmungen ermittelt und hausgerätespezifisch bzw. typspezifisch definiert und abgelegt. Mit dem erfindungsgemäßen Verfahren oder einer vorteilhaften Ausgestaltung davon kann ein Hausgerät mit einer derartig rotierenden Trommel auf jedem Untergrund betrieben werden. Die Maschine kann, insbesondere mit Informationen eines Beschleunigungssensors, erkennen, wo die kritischen Drehzahlen sind, wo somit unkontrolliert die Vibrationen stattfinden können, wobei selbstständig und automatisch dann diese Schleuderdrehzahlen vermieden bzw. schnell überbrückt und durchlaufen werden können.

Ein Ausführungsbeispiel der Erfindung wird nachfolgend anhand schematischer Zeichnungen näher erläutert. Es zeigen:
- Fig. 1: ein Ablaufdiagramm eines Ausführungsbeispiels eines erfindungsgemäßen Verfahrens;
- Fig. 2: ein schematisches Diagramm der Schleuderdrehzahl gemäß einer ersten Ausführung; und
- Fig. 3: ein schematisches Diagramm der Schleuderdrehzahl gemäß einem weiteren Ausführungsbeispiel.

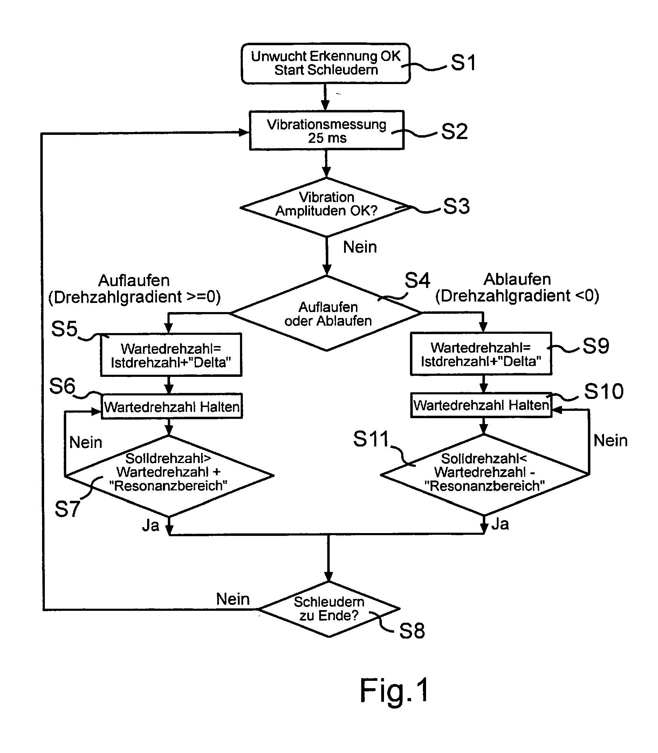

Das Verfahren gemäß Fig. 1 wird durch eine Steuereinheit in einem Hausgerät zur Pflege von Wäschestücken durchgeführt und überwacht. Das Hausgerät ist insbesondere als Waschmaschine ausgebildet, welche eine frontseitige Beschickungsöffnung aufweist. Das Hausgerät ist auf einem Fußboden aus Holz aufgestellt.

Im Betrieb des Hausgeräts bei einem Schleudervorgang und somit bei einer Rotation der Trommel des Hausgeräts wird über eine Unwuchterkennungseinrichtung auch die Unwucht der Trommel erkannt. Zu Beginn des Schleudervorgangs wird überprüft, ob die Unwuchterkennungseinrichtung aktiviert ist und betriebsbereit ist. Trifft dies zu, wird gemäß einem Schritt S1 der Schleudervorgang gestartet. Im Weiteren wird gemäß einem Schritt S2 eine Vibrationsmessung durchgeführt. Vorzugsweise wird dabei vorgesehen, dass in bestimmten Zeitintervallen, beispielsweise alle 25 ms eine derartige Vibrationsmessung erfolgt.

Dabei wird erfasst, ob die Vibrationen in einem akzeptablen Bereich sind oder nicht. Dies wird im Ausführungsbeispiel dadurch detektiert, dass bei gemessenen Vibrationen die Amplitude erfasst wird und mit Referenz-Werten verglichen wird. Dies erfolgt gemäß einem Schritt S3. Übersteigen die gemessenen Amplituden einer Vibration eine Referenz-Amplitude, so wird in einem weiteren Schritt S4 überprüft, ob ein Auflaufen oder ein Ablaufen erfolgt. Bei einem Auflaufen wird überprüft, ob der Drehzahlgradient größer oder gleich Null bleibt, wobei ein Ablaufen dadurch charakterisiert ist, dass der Drehzahlgradient kleiner Null ist bzw. wird. Wird festgestellt, dass gemäß dem Schritt S4 ein Auflaufen erfolgt, so wird in einem Schritt S5 eine Wartedrehzahl eingestellt, welche sich aus einer Istdrehzahl abzüglich einer Delta-Drehzahl ergibt. Diese Wartedrehzahl wird dann gemäß einem Schritt S6 für eine vorgebbare Zeitdauer eingestellt und gehalten. In einem Schritt S7 wird dann überprüft, ob eine Solldrehzahl größer als die Wartedrehzahl zuzüglich einer vordefinierbaren Resonanzbereichs-Drehzahl ist. Ist dies nicht der Fall, so wird auf den Schritt S6 zurückgegangen und wiederum für eine vorgebbare Zeitdauer die Wartedrehzahl gehalten. Diese Schleife zwischen den Schritten S6 und S7 wird so lange durchgeführt, bis im Schritt S7 festgestellt wird, dass die Solldrehzahl größer als die Wartedrehzahl plus der Resonanzbereichs-Drehzahl ist. Der Schleudervorgang wird dann fortgesetzt, wobei dann in einem Schritt S8 überprüft wird, ob der Schleudervorgang ohne weitere unerwünscht hohen Vibrationen zu Ende geführt werden kann. Ist der Schleudervorgang noch nicht zu Ende, wird auf den Schritt S2 zurückgegangen und eine Vibrationsmessung in den vorgenannten Zeitintervallabständen durchgeführt. Auch hier wird dann die Schleife zwischen den Schritten S2 bis S8 so lange durchgeführt, bis der Schleudervorgang beendet wird.

Wird allerdings im Schritt S4 nicht ein Auflaufen, sondern ein Ablaufen erfasst, so wird in einem Schritt S9 eine Wartedrehzahl eingestellt, welche sich als Summe der Istdrehzahl zuzüglich der Delta-Drehzahl ergibt. Diese Wartedrehzahl wird dann gemäß einem Schritt S10 für eine vorgebbare Zeitdauer eingestellt. Nach dieser Zeitdauer bzw. auch während dieser Zeitdauer wird in einem Schritt S11 überprüft, ob die Solldrehzahl kleiner dieser Wartedrehzahl abzüglich der Resonanzbereichs-Drehzahl ist. Ist dies nicht der Fall, wird in einer Schleife auf den Schritt S10 zurückgegangen und die Schritte S10 und S11 so lange wiederholt, bis diese Solldrehzahl kleiner der Wartedrehzahl abzüglich der Resonanzbereichs-Drehzahl ist. Ist dies eingetreten, wird dann wiederum auf den Schritt S8 weitergegangen und geprüft, ob der Schleudervorgang beendet ist. Trifft dies nicht zu, wird auch hier wiederum auf den Schritt S2 zurückgegangen und die Schritte folgend auf den Schritt S2 durchgeführt.

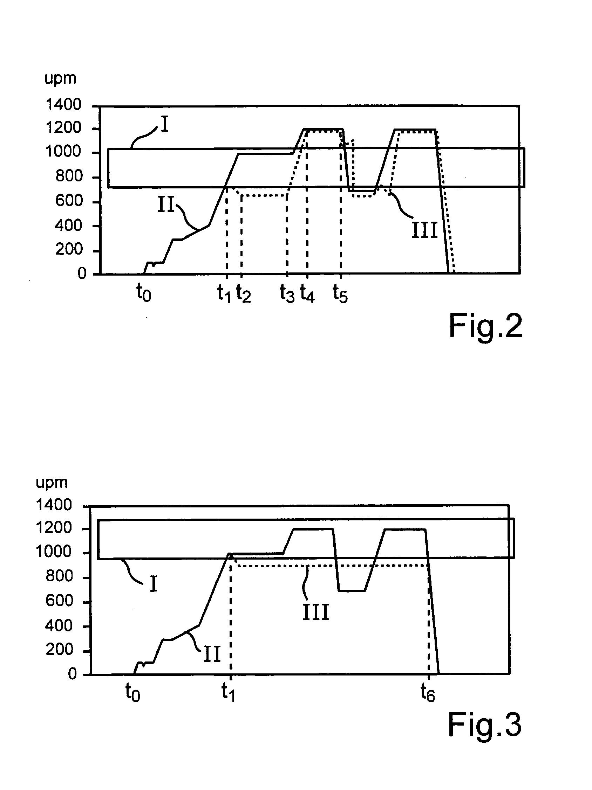

In Fig. 2 ist ein schematisches Diagramm gezeigt, bei dem die Schleuderdrehzahl in Abhängigkeit von der Zeit dargestellt ist. Das Resonanzband I bzw. das Frequenzband mit den kritischen Frequenzen, welche unerwünschte Vibrationen aufgrund der Kopplung des Hausgeräts mit dem Untergrund hervorrufen, ergibt sich hier in etwa in einem Bereich zwischen 750 Umdrehungen pro Minute und 1050 Umdrehungen pro Minute. Dieses Band I ist lediglich beispielhaft. Der Bereich im Band I stellt somit den Resonanzbereich dar.

Durch den Kurvenverlauf II, welcher die durchgezogene Linie darstellt ist der normale herkömmliche Schleudervorgang gezeigt.

Durch die Erfindung kann in Fig. 2 erreicht werden, dass die in unerwünscht großer Weise auftretenden untergrundspezifischen Vibrationen detektiert werden und beim Erreichen der Schleuderdrehzahl bzw. beim Einfahren der Schleuderdrehzahl in das Band I zum Zeitpunkt t1 darauf reagiert wird und die Schleuderdrehzahl bis zum Zeitpunkt t2 reduziert wird, wobei dies dann bis zum Zeitpunkt t3 gehalten wird. Zum Zeitpunkt t3 wird dann die Schleuderdrehzahl innerhalb kürzester Zeit bis zum Zeitpunkt t4 relativ stark erhöht, so dass das Band I relativ schnell durchlaufen werden kann. Zum Zeitpunkt t4 weist die Schleuderdrehzahl dann eine Enddrehzahl auf, welche oberhalb des Bands I liegt. Entsprechend wird dann diese Drehzahl für eine bestimmte Zeitdauer bis zum Zeitpunkt t5 gehalten. Im Weiteren ist dann durch die gestrichelt dargestellte Linie III, welche die spezifisch und automatisch veränderte Drehzahllinie gemäß einer Ausführung der Erfindung zeigt, abhängig vom Schleuderverlauf wieder so geändert, dass beim Eintreten der Schleuderdrehzahl in das kritische Band I automatische Maßnahmen ergriffen werden, um aus diesem die Schleuderdrehzahl herauszuhalten oder in möglichst kurzer Zeit dieses Band I zu durchlaufen.

In Fig. 3 ist ein weiteres Ausführungsbeispiel einer derartigen Schleuderdrehzahlvariation gezeigt, wobei bei dieser Ausführung das Band I bei höheren Drehzahlen liegt. In der gezeigten Ausführung wird vorgesehen, dass die Schleuderdrehzahl so verändert wird, dass die Schleuderdrehzahl immer kleiner ist als die untere Schwelle des Bands I. Dies ist durch die gestrichelte Linie III gezeigt. Dem gegenüber ist durch die Linie II der herkömmliche Verlauf gezeigt, wobei vom Zeitpunkt t0 bis zum Zeitpunkt t1 die Linien II und III identisch verlaufen, wie dies auch ebenfalls dann ab dem Zeitpunkt t6 der Fall ist.

## Patentansprüche

1. Verfahren zur Einstellung einer Schleuderdrehzahl einer Trommel eines Hausgeräts zur Pflege von Wäschestücken, welches auf einem Untergrund aufgestellt wird, bei welchem bei einem Auftreten von in der Frequenz und/oder der Amplitude untergrundabhängigen Vibrationen des Hausgeräts bei dem Schleudervorgang diese Vibrationen detektiert (Schritt S2) und mit Referenz-Werten verglichen werden (Schritt S3), wobei bei einem Abweichen der die Vibrationen charakterisierenden Parameterwerte von den Referenz-Werten die Schleuderdrehzahl verändert wird, **dadurch gekennzeichnet, dass** bei einem Schleudervorgang ein Gradient einer Istdrehzahl der Trommel erfasst und ermittelt wird, ob der Drehzahlgradient aufläuft oder abläuft (Schritt S4), und die Schleuderdrehzahl abhängig von dem ermittelten Drehzahlgradienten verändert wird (Schritt S5 oder S9).

2. Verfahren nach Anspruch 1, bei welchem die Schleuderdrehzahl abhängig von den die spezifische Vibration charakterisierenden Parameterwerten zur Reduzierung der Vibration verändert wird.

3. Verfahren nach Anspruch 1 oder 2, bei welchem die Vibrationen durch einen Beschleunigungssensor erfasst werden.

4. Verfahren nach einem der vorhergehenden Ansprüche, bei welchem die Ermittlung, ob der Drehzahlgradient aufläuft oder abläuft, bei einem Überschreiten einer Referenz-Amplitude durch eine erfasste spezifische Amplitude einer detektierten Vibration bei einem Schleudervorgang ermittelt wird

5. Verfahren nach Anspruch 4, bei welchem bei einem Auflaufen des Drehzahlgradienten eine erste Wartedrehzahl bestimmt (Schritt S5) und für eine vorgebbare Zeitdauer eingestellt wird (Schritt S6), welche sich aus der Istdrehzahl abzüglich einer vordefinierten Delta-Drehzahl bestimmt.

6. Verfahren nach Anspruch 5, bei welchem nach Ablauf der Zeitdauer bestimmt wird, ob eine Solldrehzahl größer der ersten Wartedrehzahl zuzüglich einer vordefinierten Resonanzbereichs-Drehzahl ist (Schritt S7).

7. Verfahren nach Anspruch 6, bei welchem der Schleudervorgang zumindest zeitweise mit dieser Solldrehzahl fortgesetzt wird, bis der Schleudervorgang ohne weitere unerwünscht hohe Vibration zu Ende führbar ist oder eine weitere unerwünscht hohe Vibration vor dem Ende des Schleudervorgangs detektiert wird (Schritt S8), falls die Solldrehzahl größer ist.

8. Verfahren nach Anspruch 6, bei welchem die erste Wartedrehzahl für eine weitere vorgebbare Zeitdauer gehalten wird, falls die Solldrehzahl kleiner ist als die erste Wartedrehzahl plus der Resonanzbereich-Drehzahl, und nach dieser weiteren Zeitdauer nochmals überprüft wird, ob die Solldrehzahl dann größer ist als die erste Wartedrehzahl plus der Resonanzbereich-Drehzahl.

9. Verfahren nach Anspruch 4, bei welchem bei einem Ablaufen des Drehzahlgradienten eine zweite Wartedrehzahl bestimmt (Schritt S9) und für eine vorgebbare Zeitdauer eingestellt wird (Schritt S10), welche sich aus der Istdrehzahl plus einer vordefinierten Delta-Drehzahl bestimmt.

10. Verfahren nach Anspruch 9, bei welchem nach Ablauf der Zeitdauer bestimmt wird, ob eine Solldrehzahl kleiner der zweiten Wartedrehzahl zuzüglich einer vordefinierten Resonanzbereichs-Drehzahl ist (Schritt S11).

11. Verfahren nach Anspruch 10, bei welchem der Schleudervorgang zumindest zeitweise mit dieser Solldrehzahl fortgesetzt wird, bis der Schleudervorgang ohne weitere unerwünscht hohe Vibration zu Ende führbar ist oder eine weitere unerwünscht hohe Vibration vor dem Ende des Schleudervorgangs detektiert wird (Schritt S8), falls die Solldrehzahl kleiner ist.

12. Verfahren nach Anspruch 10, bei welchem die zweite Wartedrehzahl für eine weitere vorgebbare Zeitdauer gehalten wird, falls die Solldrehzahl größer ist als die Wartedrehzahl abzüglich der Resonanzbereich-Drehzahl, und nach dieser weiteren Zeitdauer nochmals überprüft wird, ob die Solldrehzahl dann kleiner ist als die zweite Wartedrehzahl abzüglich der Resonanzbereich-Drehzahl.

13. Verfahren nach einem der vorhergehenden Ansprüche, bei welchem die Schleuderdrehzahl mit eine derartigen Gradienten so verändert wird, dass ein Frequenzband (I) eines Resonanzbereichs der Vibrationen in kurzer Zeit durchfahren wird.

14. Verfahren nach einem der vorhergehenden Ansprüche, bei welchem das Hausgerät auf einem Holzboden als Untergrund aufgestellt wird.

## Claims

1. Method for setting a spin speed of a drum of a household laundry care appliance, which is installed on a base, wherein if the household appliance vibrates in a manner that is a function of the base in respect of frequency and/or amplitude during a spin operation, such vibrations are detected (step S2) and compared with reference values (step S3), with the spin speed being changed if the parameter values characterising the vibrations deviate from the reference values, **characterised in that** during a spin operation a gradient of an actual speed of the drum is detected and it is determined whether the speed gradient is rising or falling (step S4), and the spin speed is changed as a function of the determined speed gradient (step S5 or S9).

2. Method according to claim 1, wherein the spin speed is changed as a function of the parameter values characterising the specific vibration to reduce the vibration.

3. Method according to claim 1 or 2, wherein the vibrations are detected by an acceleration sensor.

4. Method according to one of the preceding claims, wherein the determination as to whether the speed gradient is rising or falling is determined when a reference amplitude is exceeded by a detected specific amplitude of a detected vibration during a spin operation.

5. Method according to claim 4, wherein if the speed gradient is rising, a first dwell speed is determined (step S5) and set for a predefinable time period (step S6), which is determined from the actual speed minus a predefined delta speed.

6. Method according to claim 5, wherein after the end of the time period it is determined whether a target speed is greater than the first dwell speed plus a predefined resonance range speed (step S7).

7. Method according to claim 6, wherein the spin operation is continued at least for a while at this target speed, until the spin operation can be brought to an end without further undesirably high vibration or a further undesirably high vibration is detected before the end of the spin operation (step S8), if the target speed is greater.

8. Method according to claim 6, wherein the first dwell speed is maintained for a further predefinable time period, if the target speed is lower than the first dwell speed plus the resonance range speed and after this further time period it is checked once again whether the target speed is then greater than the first dwell speed plus the resonance range speed.

9. Method according to claim 4, wherein if the speed gradient is falling, a second dwell speed is determined (step S9) and set for a predefinable time period (step S10), which results from the actual speed plus a predefined delta speed.

10. Method according to claim 9, wherein after the end of the time period it is determined whether a target speed is lower than the second dwell speed plus a predefined resonance range speed (step S11).

11. Method according to claim 10, wherein the spin operation is continued at least for a while at this target speed, until the spin operation can be brought to an end without further undesirably high vibration or a further undesirably high vibration is detected before the end of the spin operation (step S8), if the target speed is lower.

12. Method according to claim 10, wherein the second dwell speed is maintained for a further predefinable time period, if the target speed is greater than the dwell speed minus the resonance range speed and after this further time period it is checked once again whether the target speed is then lower than the second dwell speed minus the resonance range speed.

13. Method according to one of the preceding claims, wherein the spin speed with such a gradient is changed so that a frequency band (I) of a resonance range of the vibrations can be passed through in a short time.

14. Method according to one of the preceding claims, wherein the household appliance is installed on a wooden floor as its base.

## Revendications

1. Procédé de réglage d'une vitesse d'essorage d'un tambour d'un appareil ménager destiné à l'entretien de linge, lequel appareil ménager est posé sur un sol, dans lequel procédé, lors d'une apparition de vibrations de l'appareil ménager, dépendant du sol quant à la fréquence et/ou l'amplitude, pendant le cycle d'essorage, ces vibrations sont détectées (étape S2) et comparées à des valeurs de référence (étape S3), la vitesse d'essorage étant modifiée en cas d'une différence des valeurs de paramètre caractérisant les vibrations par rapport aux valeurs de référence, **caractérisé en ce que** pendant un cycle d'essorage, un gradient d'une vitesse réelle du tambour est détecté et **en ce qu'**il est déterminé si le gradient de la vitesse augmente ou diminue (étape S4), et **en ce que** la vitesse d'essorage est modifiée en fonction du gradient de la vitesse déterminé (étape S5 ou S9).

2. Procédé selon la revendication 1, dans lequel la vitesse d'essorage est modifiée en fonction des valeurs de paramètre caractérisant la vibration spécifique, destinées à réduire la vibration.

3. Procédé selon la revendication 1 ou 2, dans lequel les vibrations sont détectées par un capteur d'accélération.

4. Procédé selon l'une quelconque des revendications précédentes, dans lequel la détection, indiquant si le gradient de vitesse augmente ou diminue, est déterminée lors d'un dépassement d'une amplitude de référence par une amplitude spécifique détectée d'une vibration détectée lors d'un cycle d'essorage.

5. Procédé selon la revendication 4, dans lequel lors d'une augmentation du gradient de vitesse, une première vitesse d'attente est déterminée (étape S5) et est réglée pour une durée prédéfinissable (étape S6), laquelle se définit à partir de la vitesse réelle moins une vitesse delta prédéfinie.

6. Procédé selon la revendication 5, dans lequel après l'expiration de la durée, il est déterminé si une vitesse théorique est plus grande que la première vitesse d'attente plus une vitesse prédéfinie du domaine de résonance (étape S7).

7. Procédé selon la revendication 6, dans lequel le cycle d'essorage est poursuivi au moins temporairement avec cette vitesse théorique jusqu'à ce que le cycle d'essorage puisse être mené jusqu'au bout sans autre vibration élevée non souhaitée ou qu'une autre vibration élevée non souhaitée soit détectée avant la fin du cycle d'essorage (étape S8) au cas où la vitesse théorique soit plus grande.

8. Procédé selon la revendication 6, dans lequel la première vitesse d'attente est maintenue pour une autre durée prédéfinissable, au cas où la vitesse théorique soit plus petite que la première vitesse d'attente plus la vitesse du domaine de résonance, et dans lequel, il est contrôlé encore une fois après cette autre durée si la vitesse théorique est alors plus grande que la première vitesse d'attente plus la vitesse du domaine de résonance.

9. Procédé selon la revendication 4, dans lequel, lors d'une diminution du gradient de vitesse, une deuxième vitesse d'attente est déterminée (étape S9) et est réglée pour une durée prédéfinissable (étape 10), laquelle se définit à partir de la vitesse réelle plus une vitesse delta prédéfinie.

10. Procédé selon la revendication 9, dans lequel, après la diminution de la durée, il est déterminé si une vitesse théorique est plus petite que la deuxième vitesse d'attente plus une vitesse prédéfinie du domaine de résonance (étape 11).

11. Procédé selon la revendication 10, dans lequel le cycle d'essorage est poursuivi au moins temporairement avec cette vitesse théorique jusqu'à ce que le cycle d'essorage puisse être mené jusqu'au bout sans autre vibration élevée non souhaitée ou qu'une autre vibration élevée non souhaitée soit détectée avant la fin du cycle d'essorage (étape S8) au cas où la vitesse théorique soit plus petite.

12. Procédé selon la revendication 10, dans lequel la deuxième vitesse d'attente est maintenue pour une autre durée prédéfinissable, au cas où la vitesse théorique soit plus grande que la vitesse d'attente moins la vitesse du domaine de résonance, et dans lequel, il est contrôlé encore une fois après cette autre durée si la vitesse théorique est alors plus petite que la deuxième vitesse d'attente moins la vitesse du domaine de résonance.

13. Procédé selon l'une quelconque des revendications précédentes, dans lequel la vitesse d'essorage est modifiée avec un tel gradient qu'une bande de fréquence (I) d'un domaine de résonance des vibrations soit traversée dans un bref temps.

14. Procédé selon l'une quelconque des revendications précédentes, dans lequel l'appareil ménager est posé sur un sol en bois en tant que sol.
